(19) Europäisches Patentamt
European Patent Office
Office européen des brevets

(11) **EP 3 794 896 B1**

(12) **FASCICULE DE BREVET EUROPEEN**

(45) Date de publication et mention
de la délivrance du brevet:
**21.12.2022 Bulletin 2022/51**

(21) Numéro de dépôt: **19737161.0**

(22) Date de dépôt: **15.05.2019**

(51) Classification Internationale des Brevets (IPC):
**H04W 72/12** *(2009.01)*     **H04W 76/14** *(2018.01)*

(52) Classification Coopérative des Brevets (CPC):
**H04W 72/1231; H04W 76/14; Y02D 30/70**

(86) Numéro de dépôt international:
**PCT/FR2019/051099**

(87) Numéro de publication internationale:
**WO 2019/220054 (21.11.2019 Gazette 2019/47)**

(54) **ALLOCATION DE RESSOURCES DE TRANSMISSION À DES TERMINAUX D2D DANS UN RÉSEAU D'ACCÈS CELLULAIRE**

ZUWEISUNG VON ÜBERTRAGUNGSRESSOURCEN AN D2D-ENDGERÄTE IN EINEM MOBILFUNKZUGANGSNETZ

ALLOCATING TRANSMISSION RESOURCES TO D2D TERMINALS IN A CELLULAR ACCESS NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.05.2018 FR 1854184**

(43) Date de publication de la demande:
**24.03.2021 Bulletin 2021/12**

(73) Titulaire: **Orange**
**92130 Issy-les-Moulineaux (FR)**

(72) Inventeurs:
• **IBRAHIM, Rita**
  **92326 Châtillon Cedex (FR)**
• **SAYRAC, Berna**
  **92326 Châtillon Cedex (FR)**
• **ASSAAD, Mohamad**
  **91192 Gif sur Yvette (FR)**

(56) Documents cités:
• **WANG FEIRAN ET AL: "Energy-Efficient Resource Allocation for Device-to-Device Underlay Communication", IEEE TRANSACTIONS ON WIRELESS COMMUNICATIONS, IEEE SERVICE CENTER, PISCATAWAY, NJ, US, vol. 14, no. 4, 1 avril 2015 (2015-04-01), pages 2082-2092, XP011577908, ISSN: 1536-1276, DOI: 10.1109/TWC.2014.2379653 [extrait le 2015-04-07] cité dans la demande**
• **RITA IBRAHIM ET AL: "When Distributed outperforms Centralized Scheduling in D2D-Enabled Cellular Networks", ARXIV.ORG, CORNELL UNIVERSITY LIBRARY, 201 OLIN LIBRARY CORNELL UNIVERSITY ITHACA, NY 14853, 6 juin 2018 (2018-06-06), XP080887650,**

**Description**

**Domaine de l'invention**

La présente invention se rapporte au domaine des télécommunications. Au sein de ce domaine, l'invention se rapporte plus particulièrement aux réseaux d'accès et à l'allocation de ressources pour établir des communications D2D.

**Art antérieur**

Un réseau d'accès à un système de télécommunication comprend un point d'accès qui fait l'interface entre un terminal et le réseau d'accès. Dans un réseau d'accès cellulaire, parfois dit réseau mobile, le point d'accès est communément appelé station de base.

Un terminal mobile qui veut établir une communication avec un destinataire doit être identifié auprès d'une station de base et doit demander à être servi par la station de base. La station de base peut servir le terminal si elle peut lui allouer une ressource spectrale.

Les réseaux d'accès mobiles sont confrontés à une demande croissante d'établissements de communication qui se traduit par une augmentation de la charge des stations de base. Lorsque la station de base a alloué toutes ses ressources spectrales, elle a atteint la pleine charge. Elle ne peut plus servir de nouveau terminal tant qu'il n'y a pas de libération d'une de ses ressources spectrales.

La notion de communications en direct (D2D Device To Device selon la terminologie anglosaxonne) entre deux terminaux au sein d'un réseau d'accès a été introduite [1]. Une paire de terminaux dits D2D établit ainsi une communication sans passer par la station de base. Ceci nécessite que les deux terminaux soient à proximité l'un de l'autre à une distance maximale fonction de la technologie mise en œuvre pour assurer la transmission.

Ces communications directes ne sont pas sans impact sur les communications établies via la station de base. En effet, elles génèrent des interférences plus particulièrement sur les communications des terminaux qui partagent la même ressource spectrale.

Ces communications directes permettent d'augmenter le nombre de communications au-delà de la pleine charge de la station de base et donc permettent d'améliorer l'efficacité spectrale du réseau d'accès.

La connaissance par la station de base de l'état du canal de propagation permet d'adapter l'allocation des ressources et d'améliorer les performances des communications établies par le réseau d'accès. Toutefois, la station de base ne peut pas connaître l'état de tous les canaux sauf à surcharger la signalisation entre les terminaux et la station de base.

Les auteurs de [2] proposent un procédé d'allocation de ressources et de puissance basé sur un algorithme d'enchère combinatoire itérative (ICA, Iterative Combinatory ) dans le but d'optimiser l'efficacité énergétique des communications. Un tel procédé basé sur la théorie des jeux est très complexe en nombre de calculs et nécessite plusieurs itérations pour atteindre un état d'équilibre des ressources allouées au sein du réseau d'accès. En outre ce procédé nécessite une coordination entre les terminaux obtenue au moyen d'une signalisation particulière supplémentaire.

**Exposé de l'invention**

L'invention propose un procédé d'allocation de ressources mis en œuvre par un réseau d'accès cellulaire comprenant une station de base qui optimise les performances d'un réseau d'accès avec des terminaux D2D.

L'invention a pour objet un procédé d'allocation de ressources de transmission à au moins un terminal émetteur d'un ensemble de paires de terminaux d'indice n candidats à une communication en direct, dits terminaux D2D. Le canal entre deux terminaux D2D en communication en direct est dit canal D2D. Le procédé comprend la définition d'un tableau de correspondance entre différents intervalles de valeurs d'une métrique d'utilité et une liste d'indices ordonnés d'un indice minimal à un indice maximal définissant un classement de ressources disponibles pour la remontée d'un indicateur de l'état d'un canal D2D. Le procédé comprend en outre pour un intervalle courant de transmission :

-   un calcul par chaque terminal émetteur d'une paire D2D de l'ensemble d'une valeur de la métrique d'utilité $v_n(t)$ évaluant une efficacité énergétique de la communication D2D de la paire,
-   une détermination d'un indice de ressource de transmission à utiliser pour une remontée d'un indicateur par chaque terminal émetteur d'une paire D2D de l'ensemble par comparaison de sa valeur de la métrique d'utilité $v_n(t)$ avec le tableau de correspondance,
-   une remontée par chaque terminal émetteur d'une paire D2D de l'ensemble d'un indicateur via la ressource d'indice déterminé,
-   une détermination du terminal émetteur D2D dit optimal dont la ressource de remontée de l'indicateur a l'indice d'ordre minimal, ce terminal optimal étant le terminal D2D autorisé à transmettre pendant l'intervalle courant de transmission.

Le réseau d'accès cellulaire comprend une station de base et plusieurs paires de terminaux D2D. L'accès au canal peut être orthogonal selon une technique OFDMA, TDMA ou CDMA. Il peut être non orthogonal mais dans ce cas le réseau doit gérer des interférences dues à ce type d'accès. La station de base SB connait les terminaux actifs dans sa zone de couverture radio (fonction de sa puissance émise, des caractéristiques du signal émis et des conditions de propagation) compte tenu des échanges dans le canal de signalisation parfois désigné par voie de retour. Ces terminaux sont dits identifiés. Généralement, la station de base identifie ces terminaux en récupérant un identifiant fourni par tout terminal qui cherche à accéder au réseau d'accès. Selon le type du réseau d'accès, l'identifiant correspond par exemple au MSISDBN, plus communément désigné par les termes numéro de téléphone. La station de base connaît en outre les destinataires des communications demandées par les différents terminaux identifiés. La station de base est donc en mesure de détecter des paires de terminaux situés dans sa zone de couverture qui sollicitent l'établissement d'une communication et qui sont donc susceptibles de mettre en œuvre une communication en directe sans passer par la station de base.

La répartition des calculs sur chaque terminal D2D permet de bénéficier de la connaissance locale de l'état du canal D2D par l'émetteur de la paire D2D, le procédé est donc dit décentralisé, ce qui n'est pas le cas d'un procédé dit centralisé où la station de base connaît une statistique de tous les canaux mais ne connait pas à tout instant l'état de tous ces canaux D2D sauf à surcharger la signalisation.

Chaque émetteur des paires D2D partage avec une éventuelle station de base et avec les autres terminaux des paires D2D leur connaissance locale de l'état de leur canal D2D (ainsi que la valeur de leur métrique de performance dite aussi métrique d'utilité) en remontant un simple indicateur sur une ressource dont l'indice est représentatif de cet état et de la valeur de cette métrique de performance.

Chaque émetteur choisit donc la ressource utilisée pour la remontée de l'indicateur en fonction de l'état instantané de son canal et de la valeur instantanée de sa métrique de performance. L'identification de la ressource sur laquelle l'émetteur mappe cet indicateur remonté permet à la station de base éventuelle et aux autres terminaux d'en déduire un niveau de la valeur de la métrique de performance en utilisant une règle de correspondance.

Ainsi, le retour des terminaux D2D peut être très restreint et se limiter à un bit ce qui permet avantageusement d'alléger la charge de la signalisation.

La métrique d'utilité visant à minimiser la consommation d'énergie des communications D2D tout en respectant une contrainte de débit (throughput), la détermination de l'indice minimal de ressources utilisées pour les remontées permet aisément l'identification du terminal émetteur optimal par chacun des terminaux D2D et par l'éventuelle station de base. Seul ce terminal optimal bénéficie d'une allocation de ressource de transmission pour transmettre pendant l'intervalle de transmission.

L'invention a en outre pour objet une station de base adaptée pour mettre en œuvre un procédé d'allocation de ressources de transmission selon l'invention. La station de base comprend :

- une mémoire mémorisant un tableau de correspondance entre différents intervalles de valeurs d'une métrique d'utilité et une liste d'indices ordonnés d'un indice minimal à un indice maximal définissant un classement de ressources disponibles pour la remontée d'un indicateur de l'état d'un canal D2D,
- un récepteur pour recevoir des indicateurs remontés via des ressources de transmission dont l'indice respectif est déterminé par le terminal émetteur d'une paire D2D par comparaison entre sa valeur de la métrique d'utilité $v_n(t)$ et le tableau de correspondance,
- un processeur pour déterminer un terminal émetteur D2D dit optimal dont la ressource de remontée de l'indicateur a l'indice d'ordre minimal,
- un émetteur pour autoriser via un canal de contrôle le terminal optimal à transmettre pendant l'intervalle de transmission.

L'invention a en outre pour objet un réseau d'accès comprenant au moins une station de base selon un objet de l'invention.

L'invention a en outre pour objet un terminal D2D adapté pour mettre en œuvre un procédé d'allocation de ressources de transmission selon l'invention. Le terminal comprend :

- une mémoire mémorisant un tableau de correspondance entre différents intervalles de valeurs d'une métrique d'utilité et une liste d'indices ordonnés d'un indice minimal à un indice maximal définissant un classement de ressources disponibles pour la remontée d'un indicateur de l'état d'un canal D2D,
- une unité de traitement pour calculer une valeur de la métrique d'utilité $v_n(t)$ évaluant une efficacité énergétique de la communication D2D de la paire et pour déterminer un indice de ressource de transmission à utiliser pour une remontée d'un indicateur par comparaison de sa valeur de la métrique d'utilité $v_n(t)$ avec le tableau de correspondance,

- un émetteur pour remonter à la station de base un indicateur via la ressource d'indice déterminé,
- un récepteur pour recevoir les indicateurs remontés provenant d'autres terminaux D2D et/ou pour recevoir une autorisation à émettre provenant de la station de base.

Selon un mode de réalisation le terminal est tel l'unité de traitement met à jour le tableau de correspondance en cas de collision durant la remontée des indicateurs.

Selon un mode de réalisation de l'invention, la métrique d'utilité $\upsilon_n(t)$ est une fonction de la puissance émise et du débit instantané de la communication de l'émetteur D2D.

Selon ce mode la métrique d'utilité évalue l'efficacité énergétique d'une communication D2D en évaluant le niveau de puissance émise par ce terminal sous contrainte d'un débit déterminé par l'état instantané du canal D2D.

Selon un mode de réalisation de l'invention, le procédé comprend en outre la diffusion d'au moins un paramètre qui minimise la probabilité de collision entre les remontées d'indicateurs sur les ressources utilisées.

Selon un mode de réalisation de l'invention, le procédé comprend en outre une modification du tableau de correspondance suite à une collision entre remontées d'un indicateur par plusieurs terminaux émetteurs D2D utilisant un même indice de ressource.

Le tableau de correspondance comprend des seuils définissant des plages de variation de la métrique d'utilité et comprend un indice de ressources correspondant à chaque plage de variation. Lorsqu'une collision intervient du fait de la remontée par au moins deux terminaux émetteur D2D d'un indicateur utilisant le même indice de ressource alors la modification consiste à découper en plusieurs plages la plage correspondant à l'indice où la collision a eu lieu. L'augmentation de la granularité des plages permet avantageusement de diminuer la probabilité de collision.

Selon un mode de réalisation de l'invention, le réseau d'accès est de type LTE et l'indicateur remonté est quantifié sur au maximum deux bits d'un canal de contrôle PUCCH format 1b.

Selon un mode de réalisation de l'invention, le réseau d'accès est de type LTE et l'allocation de ressources de transmission de la station de base au terminal optimal utilise un canal de contrôle descendant PDCCH du réseau d'accès.

L'invention s'applique également à un programme d'ordinateur, notamment un programme d'ordinateur sur ou dans un support d'informations, adapté à mettre en œuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé d'allocation de ressources de transmission selon l'invention. Ce programme peut avoir plusieurs modules destinés à des entités différentes telles la station de base et les terminaux D2D.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

## Liste des figures

D'autres caractéristiques et avantages de l'invention apparaîtront lors de la description qui suit d'exemples donnés à titre d'exemples non limitatifs, description faite en regard des figures annexées suivantes.

La figure 1 est un schéma d'un réseau d'accès avec une station de base et des terminaux D2D identifiés par cette station.

La figure 2 est un organigramme d'un mode de réalisation d'un procédé selon l'invention.

La figure 3 est un schéma illustrant un mode de réalisation du mappage des valeurs quantifiées de la métrique d'utilité $v_n(t)$ sur les indices des ressources disponibles pour la remontée d'information sur le canal D2D.

La figure 4 est un schéma illustrant les indices des ressources de retour (feedback) sur l'état des canaux D2D de respectivement quatre terminaux D2D après le mappage, dit retour avec indexation de canal.

La figure 5 représente des courbes issues de simulations de la puissance consommée en dB/RB en fonction du seuil de SNR $\gamma_{th}$ en dB pour différents procédés d'allocation de ressources.

La figure 6 représente des courbes issues de simulations d'efficacité énergétique pour différents procédés d'allocation de ressources.

La figure 7 est un schéma d'une structure simplifiée d'une station de base mettant un œuvre un procédé d'allocation de ressources de transmission selon l'invention.

La figure 8 est un schéma d'une structure simplifiée d'un terminal D2D mettant un œuvre un procédé d'allocation de ressources de transmission selon l'invention.

## Description de modes de réalisation de l'invention

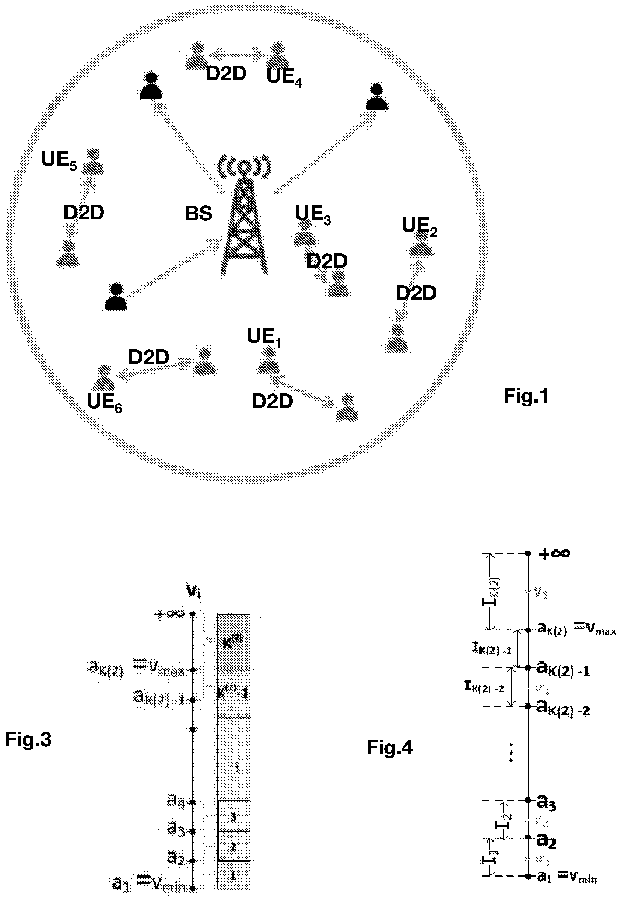

Un réseau d'accès est illustré à la figure 1. Une seule station de base BS est représentée par souci de simplification mais le réseau d'accès peut comprendre d'autres stations de base.

La zone de couverture est représentée de façon très schématique par un rond centré sur la station de base. Bien entendu cette zone a en réalité un contour qui dépend de l'environnement, cet environnement influe en particulier sur les conditions de propagation et donc sur la portée dans une direction donnée. Les terminaux identifiés par la station de base sont représentés répartis plus ou moins régulièrement autour de la station de base. Il est bien entendu que cette représentation est utilisée à des fins d'illustration et qu'en réalité la répartition est totalement aléatoire.

Un terminal qui se voit allouer une ressource spectrale par la station de base pour l'établissement d'une communication relayée par cette station est dit servi. Toutefois, quand la station a alloué toutes ses ressources spectrales elle est à pleine charge et ne peut plus servir de terminal qui demande l'établissement d'une communication.

Lors de la demande d'établissement de la communication, la station de base a connaissance de l'identifiant du destinataire. En comparant avec une liste de terminaux identifiés dans sa zone de couverture, la station de base peut déterminer si le destinataire appartient à cette liste. Ainsi, la station de base peut identifier des paires de terminaux D2D susceptibles d'établir une communication en direct. Les terminaux d'une $n^{ième}$ paire D2D sont séparés d'une distance $d_n \in [d_{min}, ..., d_{max}]$.

Le réseau d'accès comprend ainsi un ensemble $\Omega$ de $N \geq 2$ paires de terminaux D2D, $N = 6$ selon l'illustration. Par souci de simplification, si des ressources sont allouées aux terminaux D2D alors elles sont différentes des ressources allouées aux terminaux cellulaires (i.e. dont la communication est relayée par la station de base). Ainsi, les interférences causées par les terminaux D2D sur les terminaux cellulaires sont par construction minimisées et vice versa.

Les liens entre les différents nœuds du système sont sujets à des évanouissements (Rayleigh fading) et à du bruit blanc Gaussien. Les gains de canal sont supposés constants pendant un intervalle de transmission (time slot). Ils changent indépendamment d'un intervalle de transmission à un autre en suivant une distribution gaussienne complexe de moyenne nulle et de variance unitaire.

Un mécanisme entre les paires D2D permet aux terminaux émetteurs $UE_1$,.., $UE_6$ des paires de connaître un état CSI (Channel State Information) du canal D2D correspondant. Citons pour exemple [3] qui décrit l'utilisation de signaux de référence pour la détermination du gain de canal entre l'émetteur et le récepteur de la $n^{ième}$ paire D2D de manière comparable à l'utilisation faite dans le LTE des signaux de référence de démodulation DMRS qui sont intégrés dans le signal de transmission. Il est donc considéré que le terminal émetteur $UE_n$ d'une paire D2D peut estimer un état instantané (par exemple le gain de canal $h_n$) du canal D2D à chaque intervalle de transmission. En fonction de l'état $h_n$ du canal, ce terminal $UE_n$ peut en déduire la puissance $P_n(t)$ et le débit $R_n(t)$ qui minimisent une métrique d'utilité $\upsilon_n(P_n(t),R_n(t))$ déterminée connue des terminaux D2D.

Le débit bit/s (bit rate) R associé à un lien est supposé en correspondance direct avec les performances radio de ce lien i.e. le rapport signal à bruit SNR (Signal to Noise Ratio) à la réception (la correspondance peut résulter du calcul *débit* = *log*(1 + *SNR*) ou résulter d'un mappage effectué à l'issue des simulations de liens).

Le réseau d'accès est paramétré avec un jeu de M seuils de SNR, $\{\gamma_1, ..., \gamma_M\}$ utilisés pour quantifier le SNR à la réception de chacun des liens D2D : si un lien D2D a un SNR compris entre deux seuils du jeu alors son SNR est choisi égal au seuil inférieur, $\gamma_i \leq SNR < \gamma_{i+1} \Rightarrow SNR = \gamma_i$. Ainsi, le système distingue M débits $\{R_1, ..., R_M\}$ qui sont en correspondance directe avec les M seuils de SNR $\{\gamma_1, ..., \gamma_M\}$ i.e. si le lien D2D a un SNR $\gamma_i$ alors il permet d'atteindre un débit $R_i$.

Un réseau LTE identifie quinze valeurs pour la qualité d'un canal codées avec un index à quatre bits auquel correspond quinze valeurs de débit : $\{R_1, ..., R_M\} = \{R_1, ..., R_{15}\}$. Donc $R_n(t) \in \{R_1, ..., R_{15}\}$.

Pour atteindre le débit $R_i$, la puissance d'émission de l'émetteur du lien D2D $n \in N$ est déterminée par :

$$P_{n,i} = min\left\{\frac{\gamma_i N_o}{|h_n|^2 L_n}, P_{max}\right\} \tag{1}$$

avec $\gamma_i$ le SNR du lien D2D $n \in N$, $h_n$ le coefficient d'évanouissement (fading) du lien D2D $n$ dit encore gain du canal, $L_n$ l'atténuation du lien (path-loss) qui dépend essentiellement de la distance $d_n$ entre les terminaux de la paire D2D $n$, $N_o$ la puissance du bruit à la réception et $P_{max}$ la puissance maximale disponible au terminal émetteur de la paire D2D $n$.

L'accès au canal est supposé de type TDMA de telle manière qu'une seule communication D2D bénéficie de ressources à chaque intervalle de transmission. Dit autrement, au plus un seul terminal D2D se voit allouer une/des ressources à chaque intervalle de transmission.

Pour un intervalle de transmission (time-slot) donné t, les notations suivantes sont utilisées :
$H(t) = [h_1, h_2, ..., h_N]$ le vecteur de l'état des canaux (gains des canaux) des $N$ paires D2D, $R_n(t)$ le débit de la $n^{ième}$ communication D2D, $P_n(t)$ la puissance d'émission pour cette $n^{ième}$ communication D2D, $R_{th}$ le seuil du débit moyenné en temps (time average throughput) qui correspond au seuil de SNR $\gamma_{th}$, $P(t)$ la matrice de dimensions $N \times M$ des puissances des $N$ paires de terminaux D2D pour obtenir les M débits $\{R_1, ..., R_M\}$ :

$$P(t) = \begin{bmatrix} P_{1,1} & P_{1,2} & ... & P_{1,M} \\ P_{2,1} & P_{2,2} & ... & P_{2,M} \\ ... & ... & ... & ... \\ P_{N,1} & P_{N,2} & ... & P_{N,M} \end{bmatrix}$$

(la variable t a été supprimée dans la matrice pour ne pas la surcharger)

Le procédé selon l'invention apporte une solution à un problème d'optimisation. Ce problème consiste à chaque intervalle de transmission à proposer une sélection (stratégie) $\Gamma$ qui identifie quelles informations à remonter sur l'état des canaux et qui identifie conjointement le terminal auquel est alloué une ressource tout en respectant une limitation des ressources disponibles pour le retour d'information dans le but de minimiser la consommation d'énergie des communications D2D sous contrainte d'un débit moyen (throughput). Ce problème peut s'écrire sous la forme :

$$\min_{\Gamma} \lim_{T \to \infty} \sup \frac{1}{T} \sum_{t=1}^{T} \sum_{n=1}^{N} \mathbb{E}[P_n(t)] \qquad (2)$$

sous contrainte que $\lim_{T \to \infty} \inf \frac{1}{T} \sum_{t=1}^{T} \mathbb{E}[R_n(t)] \geq R_{th}$, $\forall n$

L'utilisation d'une technique de Lyapunov [4] permet d'écrire différemment le problème (2) d'optimisation en introduisant des queues virtuelles $Q_n$, $Q_n(t + 1) = max ((Q_n(t) - R_n(t)), 0) + R_{th}$.

$Q$ est le vecteur des queues virtuelles pour tous les terminaux émetteurs $UE_n$ des paires de terminaux D2D : $Q = [Q_1, Q_2, ..., Q_N]$.

Le problème d'optimisation (2) revient alors à minimiser la consommation d'énergie du réseau d'accès tout en garantissant la stabilité des queues virtuelles et ceci bien que les ressources disponibles pour le retour d'information (feedback) soient limitées.

La stabilité des queues est obtenue en minimisant l'expression suivante :

$$\min_{\Gamma} \sum_{n=1}^{N} V \mathbb{E}[P_n(\Gamma(t))] - Q_n(t) \mathbb{E}[R_n(\Gamma(t))]$$

$$(3)$$

avec V un (poids) réel positif dite constante de Lyapunov choisie de manière à permettre le compromis entre la minimisation de la puissance et la taille des queues.

Les métriques d'utilité $\upsilon_n(t)$ peuvent s'exprimer sous la forme :

$$\upsilon_n(t) = \min_{m \in \{1, ..., M\}} \left( V P_{n,m}(t) - Q_n(t) R_m(t) \right) \qquad (8)$$

A chaque intervalle de transmission t, les métriques d'utilité prennent des valeurs dans l'intervalle $[\upsilon_{min}(t), \upsilon_{max}(t)]$ tel que :

$$\upsilon_{min}(t) = -t R_{th} R_M \qquad (9)$$

$$\upsilon_{max}(t) = \upsilon_{min}(t) + r \frac{V P_{max} - R_{th} R_1 - \upsilon_{min}(t)}{\left( K^{(2)} \right)^f} \qquad (10)$$

avec r = 1, f = 0 et $K^{(2)}$ le nombre d'éléments de ressources disponibles pour les retours des indicateurs d'état de canal D2D (CSI feedback).

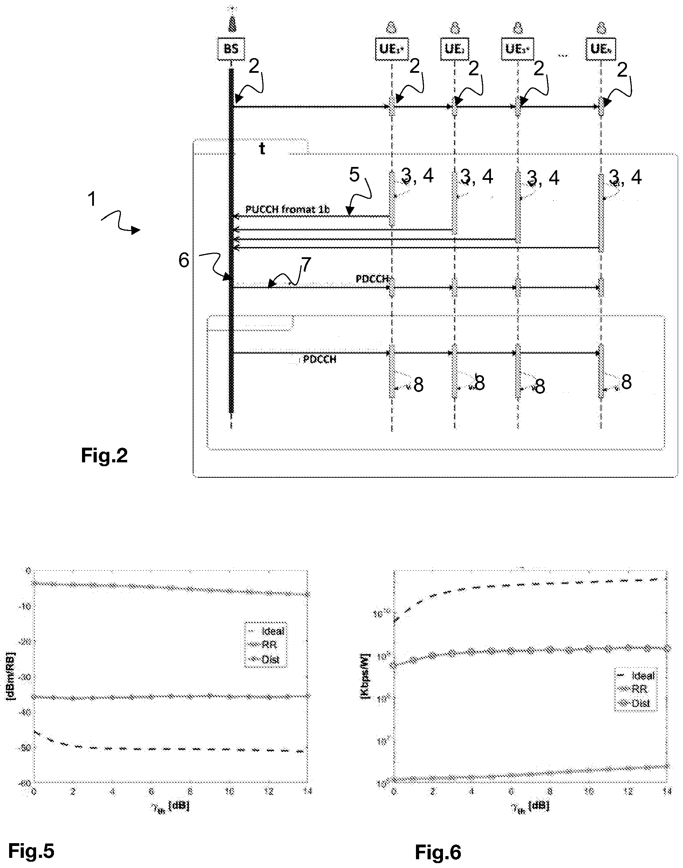

Un mode de réalisation d'un procédé d'allocation de ressources de transmission selon l'invention est détaillé ci-après et illustré par l'organigramme représenté à la figure 2. L'organigramme illustré correspond à une implémentation dans un réseau d'accès compatible d'un standard LTE du 3GPP.

Selon une étape 2, le procédé comprend la définition du tableau de correspondance. Ce tableau établi la correspondance entre différents intervalles de valeurs de la métrique d'utilité et une liste d'indices ordonnés d'un indice minimal à un indice maximal. Cette liste définit un classement des ressources (appelés éléments de ressource) disponibles pour la remontée de l'indicateur, par exemple de 1 ou 2 bits, de l'état du canal D2D. Le tableau peut être défini par la station de base et transmis aux terminaux D2D. Il peut tout aussi bien être défini initialement et mémorisé par la station et les terminaux D2D lors d'une opération d'initialisation de ces dispositifs.

L'intervalle $[\upsilon_{min}(t), \upsilon_{max}(t)]$ est utilisé pour quantifier la métrique d'utilité $\upsilon_n(t)$ et déterminer le tableau de correspondance. Le tableau établit un mappage entre différents sous-intervalles de valeurs de la métrique d'utilité $\upsilon_n(t)$ et une liste d'indices. Les indices de la liste sont ordonnés d'un indice minimal à un indice maximal pour définir un classement des ressources disponibles pour la remontée d'un indicateur de l'état d'un canal D2D.

Les valeurs continues de l'intervalle $[\upsilon_{min}(t), \upsilon_{max}(t)]$ sont quantifiées et mappées sur un jeu fini $\mathbb{S}_v = \{a_1, \ldots, a_{K^{(2)}}\}$ de $K^{(2)}$ éléments tels que :

$$a_j = v_{min} + (j-1)\frac{v_{max}-v_{min}}{K^{(2)}-1} \text{ pour } 1 \leq j \leq K^{(2)}.$$

Ecrit autrement :

$$\mathbb{S}_v = \bigcup_{j=1,\ldots,K^{(2)}} \left\{ v_{min} + (j-1)\frac{v_{max}-v_{min}}{K^{(2)}-1} \right\} \tag{11}$$

Pour chaque intervalle de transmission courant t, le procédé comprend les étapes de calcul 3, de détermination 4 d'un indice, de remontée 5 de l'indicateur, d'une détermination 6 du terminal optimal et d'une autorisation 7 à transmettre.

Chaque terminal émetteur $UE_n$ d'une paire D2D calcule 3 la valeur de la métrique d'utilité $\upsilon_n(t)$ donnée par la relation (8).

Chaque terminal émetteur $UE_n$ d'une paire D2D détermine 4 l'indice $\tilde{k}_n$ de la ressource de transmission à utiliser pour la remontée de l'indicateur. Cette détermination est effectuée en comparant la valeur de sa métrique d'utilité avec le tableau de correspondance.

Le mappage appelé retour avec indice de canal (Channel Indexing Feedback) défini par le tableau fait correspondre la valeur quantifiée de la métrique d'utilité $\upsilon_n$ prise à un intervalle t de transmission avec un indice $a_j$ de ressources de transmission pour effectuer le retour de l'indicateur. A chaque intervalle t de transmission, la valeur quantifiée est notée $\tilde{\upsilon}_n$ et l'indice correspondant de la ressource de transmission à utiliser pour la remontée est noté $\tilde{k}_n$ :

$$\tilde{v}_n = \operatorname{argmin}_{a_i \in \mathbb{S}_v} (v_n(t) - a_i)\mathbf{1}_{\{v_n(t) > a_i\}} \tag{12}$$

$$\tilde{k}_n = \operatorname{argmin}_{a_i \in \mathbb{S}_v} (v_n(t) - a_i)\mathbf{1}_{\{v_n(t) > a_i\}} \tag{13}$$

Le mode de réalisation du mappage avec indice de canal illustré par la figure 3 consiste à déterminer à quel sous-intervalle de l'intervalle $[\upsilon_{min}(t), \upsilon_{max}(t)]$ appartient la valeur de la métrique d'utilité $\upsilon_n$ prise à l'intervalle t de transmission et par exemple à retenir la valeur basse du sous-intervalle. Le mappage le plus simple illustré par la figure 3 associe aux valeurs basses des sous-intervalles prises successivement par ordre croissant les éléments de $\mathbb{S}_v$ pris successivement par ordre croissant de $a_1$ à $a_{K(2)}$.

La figure 4 illustre la détermination de l'indice $\tilde{k}_n$ de la ressource de transmission pour quatre terminaux d'indices respectivement $n = 1$, $n = 2$, $n = 3$ et $n = 4$. Selon l'exemple illustré, $\tilde{\upsilon}_1 = a_{K(2)}$ et $\tilde{k}_1 = K^{(2)}$, $\tilde{\upsilon}_2 = a_2$ et $\tilde{k}_2 = 2$, $\tilde{\upsilon}_3 = a_1$ et $\tilde{k}_3 = 1$, $\tilde{\upsilon}_4 = a_{K(2)-2}$ et $\tilde{k}_1 = K^{(2)} - 2$. De manière ordonnée de la plus faible à la plus grande valeur des métriques d'utilité des quatre terminaux, ceci donne :

$$\tilde{v}_3 = a_1 \text{ et } \tilde{k}_3 = 1$$

$$\tilde{v}_2 = a_2 \text{ et } \tilde{k}_2 = 2$$

$$\tilde{v}_4 = a_{K^{(2)}-2} \text{ et } \tilde{k}_1 = K^{(2)} - 2$$

$$\tilde{v}_1 = a_{K^{(2)}} \text{ et } \tilde{k}_1 = K^{(2)}$$

Chaque terminal émetteur $UE_n$ d'une paire D2D remonte 5 l'indicateur en utilisant la ressource dont il a déterminé l'indice selon l'étape 4. La valeur de cet indicateur peut être identique entre tous les terminaux qui remontent un indicateur.

Cette remontée peut s'effectuer dans un réseau LTE au moyen d'un signal de contrôle PUCCH (Physical Uplink Control Channel) format 1, 1a ou 1b. Les signaux de contrôle PUCCH format 1, 1a ou 1b sont communément utilisés pour signifier un accord ou désaccord ACK/NACK ou pour signifier une requête d'autorisation (SR, scheduling request). L'information portée par ces signaux de contrôle comporte un à deux bits par sous-trame. Le nombre $K^{(2)}$ de signaux de contrôle PUCCH format 1, 1a ou 1b qui peuvent être soutenu simultanément est égal au produit des deux identifiants :

- $N_{RB}$ le nombre de blocs de ressources (RB, Ressource Blocks) disponibles pour un canal de contrôle PUCCH de format 2, 2a ou 2b à chaque intervalle de temps TTI (time-slot) pour la remontée des CSI,

- $C_{MUX}^2$ qui donne la capacité de multiplexage par RB c'est-à-dire le nombre d'utilisateurs qui peuvent remonter leur CSI sur le même PRB avec un PUCCH format 1, 1a ou 1b. Ce paramètre dépend de : (i) le nombre de codes orthogonaux $N_{OC}$ possibles et (ii) la différence

$\Delta_{shift}^{PUCCH}$ entre deux décalages cyclique consécutifs pour des ressources utilisant le même code.

Ainsi, $C_{MUX}^2 = 12 N_{OC}/\Delta_{shift}^{PUCCH}$.

$$\text{Donc } K^{(2)} = N_{RB} \times C_{MUX}^2.$$

La station de base détermine 6 le terminal émetteur optimal d'indice $n^*$ selon l'équation (14). Cette détermination est très facile puisqu'il suffit d'identifier la ressource utilisée de plus faible indice $k^*$. Cette ressource correspond en effet à la plus petite valeur de la métrique d'utilité entre les différentes valeurs déterminées par les différents terminaux i.e. au terminal présentant la meilleure efficacité énergétique.

$$n^* = \text{argmin}_{n \in \{1,\dots,N\}} \{\tilde{v}_n | \tilde{v}_m \neq \tilde{v}_n \ \forall m \in \{1,\dots,N\}\setminus n\} \tag{14}$$

La station de base autorise 7 (schedule) ce terminal optimal à transmettre pendant l'intervalle de transmission courant t.

Selon un autre mode de réalisation du procédé, chaque terminal D2D assure les fonctions de la station de base précédemment décrite. Ces terminaux sont supposés de type full-duplex, ils peuvent recevoir et émettre en même temps. Plus précisément, la remontée des indicateurs n'est pas faite uniquement vers une station de base. Selon ce mode, chaque terminal D2D reçoit les remontées 5 d'indicateur faites par les autres terminaux D2D. Connaissant son propre indice $\tilde{k}_n$ de ressource, chaque terminal peut déterminer le classement des indices de ressources utilisées et identifier le terminal $n^*$ ayant utilisé la ressource de plus faible indice $k^*$. Le terminal ayant utilisé la ressource de plus faible indice est donc connu de chacun des terminaux D2D et en particulier de lui-même. Il peut donc s'autoriser à transmettre pendant l'intervalle de transmission courant t. Un tel mode est particulièrement adapté pour des réseaux autonomes i.e. sans entité centrale.

Quel que soit le mode de réalisation du procédé, des collisions peuvent intervenir lors de la remontée des indices. Une collision intervient lorsqu'au moins deux terminaux ont la même valeur quantifiée $\tilde{v}_n$ de métrique d'utilité et utilisent par suite un même indice $\tilde{k}_n$ de ressource pour remonter leur indicateur. Une telle collision ne permet pas de déterminer le terminal optimal si elle intervient pour l'indice utilisé le plus faible $k^*$. Un autre terminal optimal peut être déterminé si toutes les remontées d'indice ne subissent pas de collision. Dans ce cas, le terminal optimal déterminé peut être celui correspondant à l'indice le plus faible n'ayant pas subi de collision.

Pour limiter les collisions, certaines adaptations du procédé peuvent être mises en œuvre. Ces adaptations consistent à :

- a) choisir la constante V de pondération de la puissance émise qui minimise une probabilité de collision entre les ressources de remontée utilisées,
- b) modifier 8 le tableau de correspondance après une collision ou après chaque collision pour éviter de futures collisions.

L'adaptation selon b) peut consister à mettre à jour le jeu des éléments de $\mathbb{S}_{v}$. En considérant que $c$ est l'indice le plus faible de la ressource sur laquelle intervient une collision, $1 \le c \le K^{(2)}$ alors la mise à jour de $\mathbb{S}_{v}$ consiste à modifier les paramètres r et f de l'équation (10) de la façon suivante :

- r est identifié à l'indice $c$, $r = c$
- f est modifié selon les équations (15)

$$\text{Si} \left( r < K^{(2)} \right) \text{ alors } f = f + 1 \qquad (15)$$

$$\text{Sinon} \left( r == K^{(2)} \right) \text{ alors } f = 0 \qquad (15)$$

La mise à jour consiste à diminuer l'intervalle [$v_{min}(t)$, $v_{max}(t)$] ce qui revient à augmenter la granularité des sous-intervalles et donc à diminuer la probabilité de collision.

Quand la collision ne prend pas place sur la ressource d'indice de plus grand ordre, cette mise à jour consiste en addition à découper en plusieurs sous-intervalles le sous-intervalle correspondant à l'indice le plus faible pour lequel une collision a eu lieu tout en diminuant l'intervalle [$v_{min}(t)$, $v_{max}(t)$]. Ceci permet d'augmenter la granularité dans la région de collision correspondant à l'indice le plus faible et permet avantageusement de diminuer la probabilité de collision dans cette région.

Dans un contexte d'absence de collision et compte tenu que le procédé vérifie l'équation (16) selon la démonstration donnée en Annexe A, alors pour une grande valeur finie de $V$, le procédé décentralisé 1 conduit à une distance au plus égale à $\mathcal{O}\left(\frac{1}{V}\right)$ de la solution optimale notée $P_{id}^{*}$ au problème d'optimisation traduit par les équations (2) tout en garantissant la stabilité du système des queues virtuelles avec un arriéré moyen des queues de $\mathcal{O}(V)$. La démonstration en est donnée en Annexe A.

Une collision intervient lors de la remontée des indicateurs lorsque deux terminaux utilisent le même élément de ressource (RE Ressource Element). La probabilité de collision $P_c$ est définie comme étant la probabilité que chaque terminal D2D ait au moins une collision avec un autre terminal D2D de telle manière qu'aucun terminal D2D ne puisse être autorisé (scheduled) à transmettre selon le procédé (i.e. aucun des terminaux n'a pu remonter son indicateur sans qu'il soit affecté par une collision (i.e. aucun terminal n'a pu avoir une utilisation exclusive d'une ressource disponible RE pour remonter son indicateur)).

Comme démontré en Annexe A cette probabilité peut s'exprimer sous la forme :

$$P_c = 1 - \sum_{i=1}^{N} \sum_{j=1}^{K^{(2)}} \bar{p}_c\{i,j\} \prod_{k<j}^{K^{(2)}} \left( 1 - \sum_{l=1\neq i}^{N} \bar{p}_c\{l,k\} \right) \qquad (17)$$

avec :

$$\bar{p}_c\{i,j\} = 2\left[exp(c_{i,j-1}) - exp(c_{i,j})\right] \times \prod_{k=1\neq i}^{N} \left[1 - 2exp(c_{k,j-1}) + 2exp(c_{k,j})\right]$$

$$c_{i,j} = -\frac{V\gamma N_0}{(a_j + Q_i R)L_i}$$

Comme démontré en Annexe A, la probabilité de collision $P_c$ est bornée par une valeur $\varepsilon$, $0 \le \varepsilon \le 1$ quand la valeur de la constante de Lyapunov est donnée par :

$$V(\epsilon) = -\frac{R_{th}Rln(\epsilon')T}{P_{max}ln(\epsilon') + \gamma N_0 L_{min}^{-1}} \qquad (18)$$

où

$$\epsilon' := \frac{1}{2N}\left[1 - \left(\frac{1-\epsilon}{NK^{(2)}}\right)^{\frac{1}{N+K^{(2)}}}\right]$$ et $L_{min}$ est l'atténuation (path-loss) pour un lien D2D avec $d_{min}$ la distance entre les terminaux de la paire D2D.

Le choix adéquat de la valeur de la constante de Lyapunov permet donc de maintenir la probabilité de collision en dessous d'une valeur faible $\varepsilon$, *avec* $\varepsilon \to 0$.

Des simulations ont été réalisées dans le contexte d'un système LTE avec les paramètres donnés dans le tableau 1 en Annexe A complété avec les paramètres suivants : *y* = 73*dB et R* = 700*kbps*/*RB.*

Le LTE considérant quinze valeurs différentes pour un CQI, les simulations ont considérées quinze débit-bits (bit-rates), i.e. *M* = 15. Les valeurs de ces débit-bits {$R_1$,..., $R_{15}$} correspondent au jeu de SNR {$\gamma_1$, ...,$\gamma_{15}$} = {0,1, ...,14}*dB.* Les *N* paires de terminaux D2D sont supposées réparties uniformément dans la cellule de rayon $R_d$. L'accès au réseau des communications de ces terminaux dépend du procédé d'allocation de ressources.

La figure 5 donne des courbes de puissance de transmission en dB/RB en fonction du seuil de SNR $\gamma_{th}$ en dB. Les courbes correspondent à un procédé distribué d'allocation de ressources selon l'invention (trait avec des carrés), à un procédé idéal d'allocation de ressources (trait pointillé) et à un procédé d'allocation de ressources round robin (trait avec des croix).

Le procédé idéal d'allocation de ressources est basé sur la connaissance par la station de base de l'état de tous les canaux D2D. Selon le procédé d'allocation de ressources round robin chaque sous-ensemble A de l'ensemble $\Omega$ des terminaux D2D se voit allouer des ressources de manière identique et circulaire dans le temps.

La comparaison des courbes permet d'observer que le procédé distribué selon l'invention réduit la puissance transmise dépensée en moyenne de 100% par rapport au procédé round robin pour différentes valeurs de seuils de SNR, $0 \le \gamma_{th} \le 14$ *dB*. Le procédé distribué ne fait pas aussi bien que la solution idéale compte tenu que des collisions peuvent intervenir. Les simulations ont pu montrer que la probabilité de collisions n'a pas dépassé 0.1 ce qui a permis d'atteindre la performance de 100% par au procédé round robin.

La figure 6 donne des courbes d'efficacité énergétique pour les mêmes procédés d'allocation de ressources que ceux considérés pour la figure 5. L'efficacité énergétique est évaluée comme étant le rapport entre le débit total (total throughput) et la puissance transmise totale pour la durée de l'ensemble des simulations. Ainsi la figure 6 représente l'évolution de l'efficacité énergétique en Kbps/W (rapport entre le débit total en kbits/s et la puissance émise en W) des différents procédés en fonction du seuil de SNR $\gamma_{th}$ en dB. La comparaison des courbes met en avant que le procédé distribué selon l'invention améliore beaucoup l'efficacité énergétique par rapport au procédé round robin pour différentes valeurs de seuils de SNR, $0 \le \gamma_{th} \le 14$ *dB.*

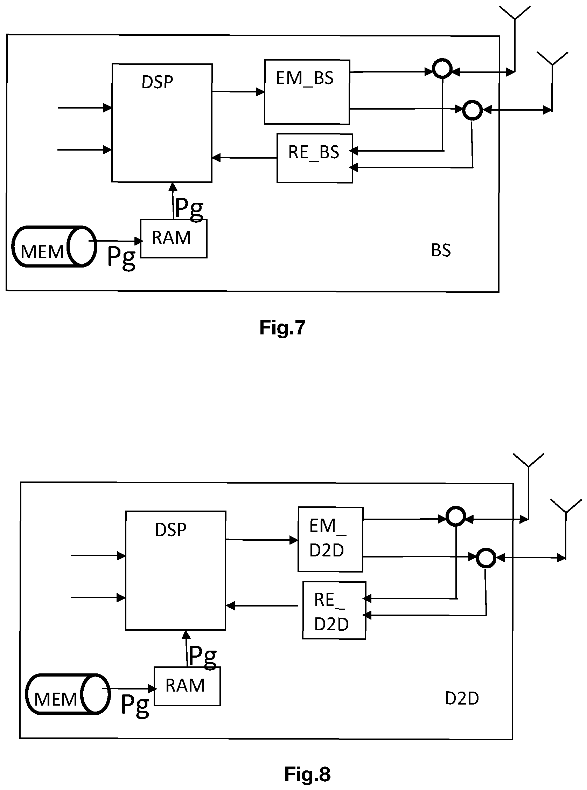

La structure simplifiée d'une station de base selon l'invention mettant en œuvre un procédé d'allocation de ressources décrit précédemment est décrite ci-après et illustrée par la figure 7.

Une telle station de base BS comprend un émetteur EM_BS, un récepteur RE_BS, une mémoire MEM comprenant une mémoire tampon RAM, une unité de traitement DSP, équipée par exemple d'un microprocesseur et pilotée par le programme d'ordinateur Pg ou éventuellement un module spécifique du programme d'ordinateur Pg mettant en œuvre le procédé d'allocation de ressources selon l'invention.

A l'initialisation, les instructions de code du programme d'ordinateur Pg sont par exemple chargées dans la mémoire RAM avant d'être exécutées par le processeur de l'unité de traitement DSP.

La mémoire MEM mémorise le tableau de correspondance entre différents intervalles de valeurs d'une métrique d'utilité et une liste d'indices ordonnés d'un indice minimal à un indice maximal définissant un classement des ressources disponibles pour la remontée d'un indicateur de l'état d'un canal D2D.

Le microprocesseur de l'unité de traitement DSP met en œuvre le procédé d'allocation de ressources décrit précédemment, selon les instructions du programme d'ordinateur Pg. Pour cela, le récepteur RE_BS reçoit des indicateurs remontés via des ressources de transmission dont l'indice respectif est déterminé par le terminal émetteur d'une paire D2D par comparaison entre la valeur de sa métrique d'utilité $\upsilon_{\boldsymbol{n}}(\boldsymbol{t})$ et le tableau de correspondance. L'unité de traitement DSP pilotée par le microprocesseur détermine un terminal émetteur D2D $\boldsymbol{n}^*$ dit optimal dont la ressource de remontée de l'indicateur a l'indice d'ordre minimal. L'émetteur EM_BS autorise via un canal de contrôle le terminal optimal à transmettre pendant l'intervalle de transmission.

La structure simplifiée d'un terminal D2D selon l'invention mettant un œuvre un procédé d'allocation de ressources décrit précédemment est détaillée ci-après et illustrée par la figure 8.

Un tel terminal D2D comprend un émetteur EM_D2D, un récepteur RE_D2D, une mémoire MEM comprenant une mémoire tampon RAM, une unité de traitement DSP, équipée par exemple d'un microprocesseur et pilotée par le programme d'ordinateur Pg ou éventuellement un module du programme d'ordinateur Pg mettant en œuvre le procédé d'allocation de ressources selon l'invention.

La mémoire MEM mémorise le tableau de correspondance entre différents intervalles de valeurs d'une métrique d'utilité et une liste d'indices ordonnés d'un indice minimal à un indice maximal définissant un classement des ressources disponibles pour la remontée d'un indicateur de l'état d'un canal D2D.

A l'initialisation, les instructions de code du programme d'ordinateur Pg sont par exemple chargées dans la mémoire RAM avant d'être exécutées par le processeur de l'unité de traitement DSP. Le microprocesseur de l'unité de traitement DSP met en œuvre le procédé d'allocation de ressources décrit précédemment, selon les instructions de code du programme d'ordinateur Pg.

Ainsi, l'unité de traitement DSP calcule une valeur de la métrique d'utilité $\upsilon_{\boldsymbol{n}}(\boldsymbol{t})$ évaluant une efficacité énergétique de la communication D2D de la paire et détermine un indice de ressource de transmission à utiliser pour une remontée d'un indicateur par comparaison de sa valeur de la métrique d'utilité $\upsilon_{\boldsymbol{n}}(\boldsymbol{t})$ avec le tableau de correspondance. L'émetteur EM_D2D remonte un indicateur via la ressource d'indice déterminé. Le récepteur RE_D2D reçoit les indicateurs provenant des autres terminaux. Soit ce récepteur reçoit en outre une autorisation à émettre provenant de la station de base, soit cette autorisation à émettre est déterminée de manière autonome par l'unité de traitement DSP du terminal en comparant tous les indices reçus avec son propre indice de ressources de remontée.

**Références :**

[1] K. Doppler, M. Rinne, C. Wijting, C. Ribeiro, and K. Hugl, "Device-to-device communication as an underlay to lte-advanced networks," IEEE Commun. Mag., vol. 47, no. 12, pp. 42-49, 2009.

[2] F. Wang, C. Xu, L. Song, and Z. Han, "Energy-efficient resource allocation for device-to-device underlay communication," IEEE Transactions on Wireless Communications, vol. 14, no. 4, pp.2082-2092, April 2015.

[3] IEEE « Design Aspects of Network Assisted Device-to-Device Communications » de Gábor Fodor, Erik Dahlman, Gunnar Mildh, Stefan Parkvall, Norbert Reider, György Miklós et Zoltân Turányi, publié en mars 2012 dans la revue Communications Magazine

[4] M. J. N. L. Georgiadis and L. Tassiulas, Resource allocation and cross-layer control in wireless networks, 2006, chapitre 4 sections 4.4 et 4.5, pages 49-57.

[5] 3GPP TR 36.843 Study on LTE device to device proximity services; Radio aspects

**Annexe A**

Le procédé selon l'invention vérifie la proposition 3 suivante.

**Proposition 3**

Soit $P_{id}^*$ la puissance moyenne (en temps) obtenue avec une autorisation (scheduling) idéale selon laquelle le réseau a un retour global des CSI (i.e. sans contrainte sur le nombre de RB disponibles pour le retour des CSI). Dans ces conditions, l'autorisation (scheduling) idéale permet d'obtenir la solution optimale du problème (2).

En l'absence de collision, la moyenne temporelle de la puissance consommée quand le procédé distribué d'allocation de ressources selon l'invention est appliqué vérifie :

$$P_{id}^* \leq \lim_{T\to\infty} \sup \frac{1}{T}\sum_{t=1}^{T}\sum_{n=1}^{N} \mathbb{E}\big[P_n^{dist}\ \big] \leq P_{id}^* + \frac{C}{V} \tag{16}$$

avec C et *V* des valeurs finies, la valeur de V étant ajustée pour obtenir que la puissance moyenne soit aussi proche que possible de l'optimale avec un compromis sur la taille des queues.

**Démonstration**

La fonction $L_Q(t)$ de Lyapunov est donnée par la relation $L_Q(t) := \frac{1}{2} \sum_{i=1}^{N} Q_i^2(t)$

En suivant la même méthodologie que dans [4], on peut prouver que l'expression « drift-plus-penalty » est bornée par la borne supérieure suivante :

$$\Delta(\boldsymbol{Q}(t)) := \Delta(\boldsymbol{L}(t)) + V \sum_{i=1}^{N} \mathbb{E}\big[\big(P_i(t)\big|\boldsymbol{Q}(t)\big)\big]$$

$$\leq C + \sum_{i=1}^{N} Q_i(t)R_{th} - \mathbb{E}\left[\sum_{n=1}^{N} Q_i(t)R_i\big(\Gamma(t), \boldsymbol{H}(t)\big|\boldsymbol{Q}(t)\big)\right]$$

$$+ V\mathbb{E}\left[\sum_{n=1}^{N} P_i(t)\big(\Gamma(t), \boldsymbol{H}(t)\big|\boldsymbol{Q}(t)\big)\right] \qquad (19)$$

avec $\Gamma(t)$ la sélection (stratégie) qui identifie quels terminaux vont remonter leur état du canal D2D et identifie conjointement le terminal auquel est alloué une ressource et C une constante telle que :

$$\mathbb{E}\left[\sum_{i=1}^{N} \frac{R_{th}^2 + R_i^2(t)}{2} \big|\boldsymbol{Q}(t)\right] \leq C$$

A chaque intervalle de temps (time slot), le procédé selon l'invention vérifie l'équation suivante :

$$\mathbb{E}\left[\sum_{i=1}^{N} \big[VP_i\big(\Gamma(t), \boldsymbol{H}(t)\big) - Q_i(t)R_i\big(\Gamma(t), \boldsymbol{H}(t)\big)\big]\big|\boldsymbol{Q}(t)\right]$$

$$\leq \mathbb{E}\left[\sum_{i=1}^{N} \big[VP_i\big(\Gamma_{id}^*(t), \boldsymbol{H}(t)\big) - Q_i(t)R_i\big(\Gamma_{id}^*(t), \boldsymbol{H}(t)\big)\big]\big|\boldsymbol{Q}(t)\right] \qquad (20)$$

où $\Gamma_{id}^*$ est la sélection idéale optimale du terminal auquel est alloué une ressource tout en supposant que le réseau a un retour global des CSI.

Vérification de l'équation (20) : à chaque intervalle de temps t(time-slot), le procédé permet à chaque terminal de remonter son CSI sous la forme d'un indice de ressource proportionnel à la valeur de sa métrique d'utilité $v_n(t) = VP_n(t) - Q_n(t)R_n(t)$.

En l'absence de collision, le terminal autorisé est celui qui a utilisé la ressource de remontée avec l'indice le plus faible i.e. celui dont la valeur de la métrique d'utilité est la plus petite. Soit $\Gamma(t)$ la sélection (stratégie) qui identifie les terminaux successivement autorisés selon le procédé de l'invention. Si $\Gamma(t)$ est comparé à n'importe quelle sélection $\Gamma^*(t)$ de retour de CSI et d'allocation de ressources y compris la sélection optimale $\Gamma_{id}^*$ de l'équation (2) alors on trouve que :

$$\sum_{i=1}^{N} \big[VP_i\big(\Gamma(t), \boldsymbol{H}(t)\big) - Q_i(t)R_i\big(\Gamma(t), \boldsymbol{H}(t)\big)\big]\big|\boldsymbol{Q}(t)$$

$$\leq \sum_{i=1}^{N} \big[VP_i\big(\Gamma^*(t), \boldsymbol{H}(t)\big) - Q_i(t)R_i\big(\Gamma^*(t), \boldsymbol{H}(t)\big)\big]\big|\boldsymbol{Q}(t)$$

Par suite, l'équation (20) est vérifiée.

La solution optimale $\Gamma_{id}^*(t)$ vérifie le problème d'optimisation (2) et garantie ainsi la stabilité des queues virtuelles. En supposant que le vecteur d'arrivée des débits est à l'intérieur de la région de stabilité du système de queues, alors :

$$\mathbb{E}\left[R_i\ \left(\Gamma_{id}^*(t)\right)|\boldsymbol{Q}(t)\right] = \mathbb{E}\left[R_i\ \left(\Gamma_{id}^*(t)\right)\right] \geq R_{th} + \epsilon\ avec\ \epsilon > 0$$

La même méthodologie que dans [33] donne :

$$\lim_{T\to\infty} \sup \frac{1}{T}\sum_{t=0}^{T-1}\sum_{i=1}^{N} \mathbb{E}[Q_i(t)] \leq \frac{C+B}{\epsilon} \tag{21}$$

avec *B* une constante finie telle que

$$P_{id}^* = \lim_{T\to\infty}\ \frac{1}{T}\sum_{t=0}^{T-1}\sum_{i=1}^{N} \mathbb{E}\left[VP_i\left(\Gamma_{id}^*(t)\right)\right] \leq B$$

L'expression précédente fixe une limite supérieure de l'arriéré moyen total des queues virtuelles. Ainsi, toutes les queues du système sont fortement stables. Par suite, à chaque fois que le vecteur de débits à l'arrivée est à l'intérieur de la région de stabilité, la sélection $\Gamma(t)$ proposée assure la forte stabilité des queues du réseau avec un arriéré moyen total des queues qui est inversement proportionnel à la distance entre le vecteur de débit and la frontière de la région de stabilité.

Avec la même méthodologie, il vient que :

$$\frac{1}{T}\sum_{t=0}^{T-1}\sum_{i=1}^{N} \mathbb{E}[P_i(t)] \leq \frac{C}{V} + \frac{\mathbb{E}\left[L_Q(0)\right]}{VT} + \frac{1}{T}\sum_{t=0}^{T-1}\sum_{i=1}^{N} \mathbb{E}\left[P_i\ \left(\Gamma_{id}^*(t)\right)\right]$$

D'où la preuve que la proposition 3 est vérifiée.

**Probabilité de collision**

**Démonstration de la relation (17)**

La démonstration qui suit est limitée au cas avec un seul débit bit (bit-rate) *M* = 1 (correspondant au débit bit *R* et au SNR *y*).

Considérons que $K^{(2)}$ est le nombre de ressources disponibles pour la remontée des indicateurs en utilisant un canal de contrôle PUCCH de format 1b selon le standard LTE du 3GPP. Une collision intervient au $k^{ième}$ niveau des $K^{(2)}$ ressources RE quand les valeurs de la métrique d'utilité d'au moins deux terminaux D2D sont mappées sur le même élément $a_m$ de $\mathbb{S}_v$. (Si $\tilde{\upsilon}_i = \tilde{\upsilon}_j = a_m\ avec\ i \neq j$ alors une collision intervient sur la ressource d'indice $\tilde{k} = m$).

Pour chaque élément $a_j \in \mathbb{S}_v$ avec $1 \leq j \leq K^{(2)}$, deux événements sont définis de la manière suivante :

- $A_{i,j}$ : le $i^{ième}$ lien D2D tel que $\tilde{\upsilon}_i = a_j$
- $B_{i,j}$ : le $i^{ième}$ lien D2D tel que $\upsilon_i \geq a_{min\{j+1,K(2)\}}$

En considérant un canal de Rayleigh (Rayleigh fading channel) $h_i$ de moyenne nulle et de variance unité pour la paire *i* de terminaux D2D alors le carré de la norme, $|h_i|^2$, a une distribution exponentielle de paramètre un. Par suite ceci permet d'en déduite la probabilité des deux événements précédents :
Pour $1 \leq j \leq K^{(2)}$, la probabilité de $A_{i,j}$ s'exprime sous la forme :

$$\mathbb{P}(A_{i,j}) = \mathbb{P}(\tilde{v}_i = a_j) = \mathbb{P}(v_i \in ]a_j, a_{j+1}]) = \mathbb{P}\left(a_j < \frac{V\gamma N_0}{|h_i|^2 L_i} - Q_i R \leq a_{j+1}\right)$$

$$= 2\left[exp\left(-\frac{V\gamma N_0}{(a_j + Q_i R)L_i}\right) - exp\left(-\frac{V\gamma N_0}{(a_{j+1} + Q_i R)L_i}\right)\right]$$

avec $a_{K(2)+1}$ *égal* à $+ \infty$

Pour $1 \leq j \leq K^{(2)} - 1$, la probabilité de $B_{i,j}$ s'exprime sous la forme :

$$\mathbb{P}(B_{i,j}) = \mathbb{P}(\tilde{v}_i \geq a_{j+1}) = \mathbb{P}(v_i > a_{j+1}) = 1 - 2exp\left(-\frac{V\gamma N_0}{(a_{j+1} + Q_i R)L_i}\right)$$

Pour simplifier les expressions précédentes, nous posons :

$$c_{i,j} = -\frac{V\gamma N_0}{(a_j + Q_i R)L_i}$$

Ainsi, $\mathbb{P}(A_{i,j})$ et $\mathbb{P}(B_{i,j})$ peuvent s'exprimer sous la forme :

$$\mathbb{P}(A_{i,j}) = 2[exp(c_{i,j}) - exp(c_{i,j+1})]$$

$$\mathbb{P}(B_{i,j}) = 1 - 2exp(c_{i,j+1})$$

Soit $\bar{p}_c\{i,j\}$ la probabilité que seul le terminal $i$ ait sa valeur quantifiée $\tilde{v}_i$ égale à $a_j \in \mathbb{S}_v$ pour $1 \leq j \leq K^{(2)}$.

$$\bar{p}_c\{i,j\} = \mathbb{P}(A_{i,j}) \prod_{k=1 \neq i}^{N} \mathbb{P}(\bar{A}_{k,j})$$

$$= 2[exp(c_{i,j-1}) - exp(c_{i,j})] \times \prod_{k=1 \neq i}^{N} [1 - 2exp(c_{k,j-1}) + 2exp(c_{k,j})]$$

La probabilité de collision est donc bien donnée par :

$$P_c = 1 - \sum_{i=1}^{N} \sum_{j=1}^{K^{(2)}} \bar{p}_c\{i,j\} \prod_{k<j}^{K^{(2)}} \left(1 - \sum_{l=1 \neq i}^{N} \bar{p}_c\{l,k\}\right)$$

Cette relation correspond à la relation (17).

**Probabilité de collision $P_c$ bornée par une valeur $\varepsilon$ lorsque (18)**

**Démonstration**

$$\forall\{i,j\} :$$

$$\mathbb{P}(A_{i,j}) \geq \mathbb{P}(B_{i,K^{(2)}})$$

$$\mathbb{P}(\bar{A}_{i,j}) \geq \mathbb{P}(B_{i,K^{(2)}})$$

Compte tenu que pour $1 \leq j \leq K^{(2)} - 1$ on a :

$$\mathbb{P}(A_{i,j}) = 2\left[exp\left(-\frac{V\gamma N_0}{(a_j + Q_i R)L_i}\right) - exp\left(-\frac{V\gamma N_0}{(a_{j+1} + Q_i R)L_i}\right)\right]$$

$$\mathbb{P}(A_{i,K^{(2)}}) = \mathbb{P}(B_{i,K^{(2)}-1}) = 1 - 2exp\left(-\frac{V\gamma N_0}{(a_{K^{(2)}} + Q_i R)L_i}\right)$$

alors on en déduit que $\mathbb{P}(A_{i,j}) \geq \mathbb{P}(B_{i,K^{(2)}-1})$ et que $\mathbb{P}(B_{i,j}) \geq \mathbb{P}(B_{i,K^{(2)}-1})$ pour tout $1 \leq i \leq N$ et tout $1 \leq j \leq K^{(2)}$.

Compte tenu de la définition de $\mathbb{P}(A_{i,j})$ et de $\mathbb{P}(B_{i,j})$ alors on a :

$$\mathbb{P}(A_{i,j}) = \mathbb{P}(B_{i,j-1}) - \mathbb{P}(B_{i,j})$$
$$\Rightarrow \mathbb{P}(\bar{A}_{i,j}) = 1 - \mathbb{P}(B_{i,j-1}) + \mathbb{P}(B_{i,j})$$
$$\Rightarrow \mathbb{P}(\bar{A}_{i,j}) \geq \mathbb{P}(B_{i,j}) \geq \mathbb{P}(B_{i,K^{(2)}-1})$$

Compte tenu des bornes inférieures de $\mathbb{P}(A_{i,j})$ et de $\mathbb{P}(\bar{A}_{i,j})$ on peut en déduire une borne inférieure et une borne supérieure pour $\bar{p}_c\{i,j\}$ :

$$\bar{p}_c\{i,j\} \geq \prod_{i=1}^{N} \mathbb{P}(B_{i,K^{(2)}})$$

$$\bar{p}_c\{i,j\} \leq \mathbb{P}(\bar{B}_{i+1modN,K^{(2)}})$$

Et par suite on peut en déduire une borne supérieure pour la probabilité de collision $P_c$ :

$$P_c = 1 - \sum_{i=1}^{N}\sum_{j=1}^{K^{(2)}} \bar{p}_c\{i,j\} \prod_{k<j}^{K^{(2)}}\left(1 - \sum_{l=1\neq i}^{N} \bar{p}_c\{l,k\}\right)$$

$$P_c \leq 1 - \prod_{m=1}^{N}\left(\mathbb{P}(B_{m,K^{(2)}-1})\right) \times \sum_{i=1}^{N}\sum_{j=1}^{K^{(2)}}\left[1 - \sum_{l=1\neq i}^{N} \mathbb{P}(\bar{B}_{l+1modN,K^{(2)}-1})\right]^j$$

$$P_c \leq 1 - NK^{(2)}\prod_{m=1}^{N}\left[1 - 2exp\left(-\frac{V\gamma N_0}{(a_{K^{(2)}} + Q_m R)L_m}\right)\right] \times \left[1 - 2\sum_{l=1}^{N} exp\left(-\frac{V\gamma N_0}{(a_{K^{(2)}} + Q_l R)L_1}\right)\right]^{K^{(2)}}$$

Pour tout $1 \leq i \leq N$ on peut vérifier que :

$$exp\left(-\frac{V\gamma N_0}{(a_{K^{(2)}} + Q_l R)L_1}\right) \leq exp\left(-\frac{V\gamma N_0}{(VP_{max} + R_{th}RT)L_{min}}\right)$$

où $L_{min}$ est l'atténuation (path-loss) pour un lien D2D avec $d_{min}$ la distance entre les terminaux de la paire D2D, et T est la durée entre deux mises à jour de la valeur de la constante de Lyapunov V.

Par suite

$$P_c \leq 1 - NK^{(2)}\left[1 - 2Nexp\left(-\frac{V\gamma N_0}{(VP_{max} + R_{th}RT)L_{min}}\right)\right]^{N+K^{(2)}}$$

En remplaçant la constante de Lyapunov $V(\varepsilon)$ par (18) et $\varepsilon'$ par :

$$\epsilon' := \frac{1}{2N}\left[1 - \left(\frac{1-\epsilon}{NK^{(2)}}\right)^{\frac{1}{N+K^{(2)}}}\right]$$

alors la probabilité de collision $P_c$ est bornée avec $\varepsilon$.

**Tableau 1**

| Paramètre | Valeur |
|---|---|
| rayon de cellule $R_d$(cell radius) en m | 500 |
| bande (Bandwidth) | 10MHz équivalent à 50RB |
| répartition des terminaux dans la cellule (UE drop) | répartition uniforme avec<br><br>$d_{min}$ = 3 m, $d_{max}$ = 350 $m$, entre paire D2D<br>*distance UE - BS* $\geq$ *35 m* |
| $N$ | 50 |
| paramètre de retour (feedback)<br><br>Nombre d'éléments de ressources | $N_{RB}$ = 2, $\Delta_{shift}^{PUCCH} = 1$ , $N_{OC}$ = 3,<br>$\Rightarrow K^{(2)}$ = 72 |
| $P_{max}$ en mW | 250 |
| atténuation (pathloss) | Le modèle d'atténuation (path-loss) donné par le tableau A.2.1.2 (première colonne outdoor-to-outdoor) du document 3GPP TR 36.843 |
| paramètres de simulations | $T$ = $10^6$ $ms$,<br>*Nombre d'iterations* = 100 *réalisations* |
| densité de bruit (noise density) en dBm/Hz | -174 |
| V | $10^{14}$ |

## Revendications

1. Procédé (1) d'allocation de ressources de transmission, mis en œuvre par un réseau d'accès cellulaire comprenant une station de base, à au moins un terminal émetteur d'un ensemble de paires de terminaux d'indice n candidats à une communication en direct, dits terminaux D2D, le canal entre deux terminaux D2D en communication en direct étant dit canal D2D, **caractérisé en ce qu'**il comprend la définition (2) d'un tableau de correspondance entre différents intervalles de valeurs d'une métrique d'utilité et une liste d'indices ordonnés d'un indice minimal à un indice maximal définissant un classement de ressources disponibles pour la remontée d'un indicateur de l'état d'un canal D2D, et **caractérisé en ce qu'**il comprend pour un intervalle courant de transmission :

- un calcul (3) par chaque terminal émetteur d'une paire D2D de l'ensemble d'une valeur de la métrique d'utilité $v_n(t)$ évaluant une efficacité énergétique de la communication D2D de la paire,
- une détermination (4) d'un indice de ressource de transmission à utiliser pour une remontée d'un indicateur par chaque terminal émetteur d'une paire D2D de l'ensemble par comparaison de sa valeur de la métrique d'utilité $v_n(t)$ avec le tableau de correspondance,
- une remontée (5) par chaque terminal émetteur d'une paire D2D de l'ensemble d'un indicateur via la ressource d'indice déterminé,
- une détermination (6) du terminal émetteur D2D dit optimal dont la ressource de remontée de l'indicateur a l'indice d'ordre minimal, ce terminal optimal étant le terminal D2D autorisé à transmettre pendant l'intervalle courant de transmission.

2. Procédé (1) d'allocation de ressources de transmission selon la revendication 1 selon lequel la métrique d'utilité $v_n(t)$ est une fonction de la puissance émise et du débit instantané de la communication de l'émetteur D2D.

3. Procédé (1) d'allocation de ressources de transmission selon la revendication 2 selon lequel le procédé comprend en outre la diffusion d'au moins un paramètre qui minimise la probabilité de collision entre les remontées d'indicateurs sur les ressources utilisées.

4. Procédé (1) d'allocation de ressources de transmission selon la revendication 1 selon lequel le procédé comprend en outre une modification du tableau de correspondance suite à une collision entre remontées d'un indicateur par plusieurs terminaux émetteurs D2D utilisant un même indice de ressource.

5. Procédé (1) d'allocation de ressources de transmission selon la revendication 1 selon lequel le réseau d'accès est de type LTE et l'indicateur remonté est quantifié sur au maximum deux bits d'un canal de contrôle PUCCH format 1b.

6. Procédé (1) d'allocation de ressources de transmission selon la revendication 1 selon lequel le réseau d'accès est de type LTE et l'allocation de ressources de transmission de la station de base au terminal optimal utilise un canal de contrôle descendant PDCCH du réseau d'accès.

7. Station de base pour allouer des ressources de transmission à au moins un terminal émetteur d'un ensemble de paires de terminaux d'indice n candidats à une communication en direct, dits terminaux D2D, le canal entre deux terminaux D2D en communication en direct étant dit canal D2D, **caractérisée en ce que** la station de base comprend :

- une mémoire mémorisant un tableau de correspondance entre différents intervalles de valeurs d'une métrique d'utilité et une liste d'indices ordonnés d'un indice minimal à un indice maximal définissant un classement de ressources disponibles pour la remontée d'un indicateur de l'état d'un canal D2D,
- un récepteur pour recevoir des indicateurs remontés via des ressources de transmission dont l'indice respectif est déterminé par le terminal émetteur d'une paire D2D par comparaison entre sa valeur de la métrique d'utilité $v_n(t)$ et le tableau de correspondance,
- un processeur pour déterminer un terminal émetteur D2D dit optimal dont la ressource de remontée de l'indicateur a l'indice d'ordre minimal,
- un émetteur pour autoriser via un canal de contrôle le terminal optimal à transmettre pendant l'intervalle de transmission.

8. Réseau d'accès comprenant au moins une station de base selon la revendication précédente.

9. Réseau d'accès selon la revendication 8 selon lequel le tableau de correspondance est modifié suite à une collision entre remontées d'un indicateur par plusieurs terminaux émetteurs D2D utilisant un même indice de ressource.

10. Réseau d'accès selon la revendication 8 selon lequel le réseau d'accès est de type LTE et l'allocation de ressources de transmission de la station de base au terminal optimal utilise un canal de contrôle descendant PDCCH du réseau d'accès.

11. Terminal D2D pour faire partie d'un ensemble de paires de terminaux d'indice n dans la couverture d'une station de base candidats à une communication en direct, dits terminaux D2D, le canal entre deux terminaux D2D en communication en direct étant dit canal D2D **caractérisé en ce que** le terminal comprend :

- une mémoire mémorisant un tableau de correspondance entre différents intervalles de valeurs d'une métrique d'utilité et une liste d'indices ordonnés d'un indice minimal à un indice maximal définissant un classement de ressources disponibles pour la remontée d'un indicateur de l'état d'un canal D2D,

- une unité de traitement pour calculer une valeur de la métrique d'utilité $v_n(t)$ évaluant une efficacité énergétique de la communication D2D de la paire et pour déterminer un indice de ressource de transmission à utiliser pour une remontée d'un indicateur par comparaison de sa valeur de la métrique d'utilité $v_n(t)$ avec le tableau de correspondance,

- un émetteur pour remonter à la station de base un indicateur via la ressource d'indice déterminé,

- un récepteur pour recevoir les indicateurs remontés provenant d'autres terminaux D2D et/ou pour recevoir une autorisation à émettre provenant de la station de base.

12. Terminal D2D selon la revendication 11 selon lequel l'unité de traitement met à jour le tableau de correspondance en cas de collision durant la remontée des indicateurs.

13. Terminal D2D selon la revendication 11 selon lequel la métrique d'utilité $v_n(t)$ est une fonction de la puissance émise et du débit instantané de la communication dudit terminal D2D.

14. Produit programme d'ordinateur comportant des instructions de programme adaptées à la mise en œuvre d'un procédé d'allocation de ressources de transmission selon l'une quelconque des revendications 1 à 6 lorsque le programme éventuellement découpé en modules est chargé et exécuté dans une station de base et dans des terminaux D2D destinés à mettre en œuvre le procédé d'allocation de ressources de transmission.

15. Support d'informations comportant des instructions de programme adaptées à la mise en œuvre d'un procédé d'allocation de ressources de transmission selon l'une quelconque des revendications 1 à 6 lorsque ledit programme éventuellement découpé en modules est chargé et exécuté dans une station de base et dans des terminaux D2D destinés à mettre en œuvre le procédé d'allocation de ressources de transmission.

**Patentansprüche**

1. Verfahren (1) zur Zuweisung von Übertragungsressourcen, durchgeführt von einem eine Basisstation enthaltenden zellularen Zugangsnetzwerk, zu mindestens einem sendenden Endgerät einer Einheit von Paaren von Endgeräten mit dem Index n, die Kandidaten für eine direkte Kommunikation sind, D2D-Endgeräte genannt, wobei der Kanal zwischen zwei D2D-Endgeräten in direkter Kommunikation D2D-Kanal genannt wird, **dadurch gekennzeichnet, dass** es die Definition (2) einer Entsprechungstabelle zwischen verschiedenen Werteintervallen einer Nutzenmetrik und eine Liste von von einem minimalen Index bis zu einem maximalen Index geordneten Indices enthält, die eine Einstufung von verfügbaren Ressourcen für die Rückmeldung eines Indikators des Zustands eines D2D-Kanals definieren, und **dadurch gekennzeichnet, dass** es für ein aktuelles Übertragungsintervall enthält:

- eine Berechnung (3), durch jedes sendende Endgerät eines Paars D2D der Einheit, eines Werts der Nutzenmetrik $v_n(t)$, die eine Energieeffizienz der D2D-Kommunikation des Paars bewertet,
- eine Bestimmung (4) eines Übertragungsressourcenindex zur Verwendung für eine Rückmeldung eines Indikators durch jedes sendende Endgerät eines Paars D2D der Einheit durch Vergleich seines Werts der Nutzenmetrik $v_n(t)$ mit der Entsprechungstabelle,
- eine Rückmeldung (5), durch jedes sendende Endgerät eines Paars D2D der Einheit, eines Indikators mittels der Ressource mit bestimmtem Index,
- eine Bestimmung (6) des optimal genannten sendenden D2D-Endgeräts, dessen Rückmeldungsressource des Indikators den Index minimaler Ordnung hat, wobei dieses optimale Endgerät das D2D-Endgerät ist, das berechtigt ist, während des aktuellen Übertragungsintervalls zu übertragen.

2. Verfahren (1) zur Zuweisung von Übertragungsressourcen nach Anspruch 1, wobei die Nutzenmetrik $v_n(t)$ eine Funktion der gesendeten Leistung und des augenblicklichen Durchsatzes der Kommunikation des D2D-Senders ist.

3. Verfahren (1) zur Zuweisung von Übertragungsressourcen nach Anspruch 2, wobei das Verfahren außerdem die Verbreitung mindestens eines Parameters enthält, der die Kollisionswahrscheinlichkeit zwischen den Rückmeldungen von Indikatoren in den verwendeten Ressourcen minimiert.

4. Verfahren (1) zur Zuweisung von Übertragungsressourcen nach Anspruch 1, wobei das Verfahren weiter eine Änderung der Entsprechungstabelle nach einer Kollision zwischen Rückmeldungen eines Indikators durch mehrere sendende D2D-Endgeräte enthält, die einen gleichen Ressourcenindex verwenden.

5. Verfahren (1) zur Zuweisung von Übertragungsressourcen nach Anspruch 1, wobei das Zugangsnetzwerk vom Typ LTE ist und der rückgemeldete Indikator auf maximal zwei Bits eines Steuerkanals PUCCH Format 1b quantifiziert ist.

6. Verfahren (1) zur Zuweisung von Übertragungsressourcen nach Anspruch 1, wobei das Zugangsnetzwerk vom Typ LTE ist, und die Zuweisung von Übertragungsressourcen von der Basisstation zum optimalen Endgerät einen Downlink-Steuerkanal PDCCH des Zugangsnetzwerks verwendet.

7. Basisstation zur Zuweisung von Übertragungsressourcen an mindestens ein sendendes Endgerät einer Einheit von Paaren von Endgeräten mit dem Index n, die Kandidaten für eine direkte Kommunikation sind, D2D-Endgeräte genannt, wobei der Kanal zwischen zwei D2D-Endgeräten in direkter Kommunikation D2D-Kanal genannt wird, **dadurch gekennzeichnet, dass** die Basisstation enthält:

- einen Speicher, der eine Entsprechungstabelle zwischen verschiedenen Werteintervallen einer Nutzenmetrik und eine Liste von von einem minimalen Index zu einem maximalen Index geordneten Indices speichert, die eine Einstufung von Ressourcen definiert, die zur Rückmeldung eines Indikators des Zustands eines D2D-Kanals zur Verfügung stehen,
- einen Empfänger zum Empfang von rückgemeldeten Indikatoren mittels Übertragungsressourcen, deren jeweiliger Index durch das sendende Endgerät eines D2D-Paars durch Vergleich zwischen seinem Wert der Nutzenmetrik $\upsilon_n(t)$ und der Entsprechungstabelle bestimmt wird,
- einen Prozessor, um ein optimal genanntes sendendes D2D-Endgerät zu bestimmen, dessen Rückmeldungsressource des Indikators den Index minimaler Ordnung hat,
- einen Sender zur Berechtigung des optimalen Endgeräts mittels eines Steuerkanals, während des Übertragungsintervalls zu übertragen.

8. Zugangsnetzwerk, das mindestens eine Basisstation nach dem vorhergehenden Anspruch enthält.

9. Zugangsnetzwerk nach Anspruch 8, wobei die Entsprechungstabelle nach einer Kollision zwischen Rückmeldungen eines Indikators durch mehrere sendende D2D-Endgeräte geändert wird, die einen gleichen Ressourcenindex verwenden.

10. Zugangsnetzwerk nach Anspruch 8, wobei das Zugangsnetzwerk vom Typ LTE ist, und die Zuweisung von Übertragungsressourcen von der Basisstation zum optimalen Endgerät einen Downlink-Steuerkanal PDCCH des Zugangsnetzwerks verwendet.

11. D2D-Endgerät, um Teil einer Einheit von Paaren von Endgeräten mit dem Index n in der Reichweite einer Basisstation zu sein, die Kandidaten für eine direkte Kommunikation sind, D2D-Endgeräte genannt, wobei der Kanal zwischen zwei D2D-Endgeräten in direkter Kommunikation D2D-Kanal genannt wird, **dadurch gekennzeichnet, dass** das Endgerät enthält:

- einen Speicher, der eine Entsprechungstabelle zwischen verschiedenen Werteintervallen einer Nutzenmetrik und eine Liste von von einem minimalen Index zu einem maximalen Index geordneten Indices speichert, die eine Einstufung von Ressourcen definiert, die für die Rückmeldung eines Indikators des Zustands eines D2D-Kanals zur Verfügung stehen,
- eine Verarbeitungseinheit zur Berechnung eines Werts der Nutzenmetrik $\upsilon_n(t)$, die eine Energieeffizienz der D2D-Kommunikation des Paars bewertet, und zur Bestimmung eines Übertragungsressourcenindex, der für eine Rückmeldung eines Indikators zu verwenden ist, durch Vergleich seines Werts der Nutzenmetrik $\upsilon_n(t)$ mit der Entsprechungstabelle,
- einen Sender zur Rückmeldung eines Indikators mittels der Ressource mit bestimmtem Index an die Basisstation,
- einen Empfänger zum Empfang der von anderen D2D-Endgeräten kommenden rückgemeldeten Indikatoren und/oder zum Empfang einer von der Basisstation kommenden Sendeberechtigung.

12. D2D-Endgerät nach Anspruch 11, wobei die Verarbeitungseinheit im Fall einer Kollision während der Rückmeldung der Indikatoren die Entsprechungstabelle aktualisiert.

13. D2D-Endgerät nach Anspruch 11, wobei die Nutzenmetrik $v_n(t)$ eine Funktion der gesendeten Leistung und des augenblicklichen Durchsatzes der Kommunikation des D2D-Endgeräts ist.

14. Computerprogrammprodukt, das Programmanweisungen aufweist, die zur Durchführung eines Verfahrens zur Zuweisung von Übertragungsressourcen nach einem der Ansprüche 1 bis 6 geeignet sind, wenn das möglicherweise in Module zerlegte Programm in eine Basisstation und in D2D-Endgeräte geladen und ausgeführt wird, die dazu bestimmt sind, das Verfahren zur Zuweisung von Übertragungsressourcen durchzuführen.

15. Datenträger, der Programmanweisungen aufweist, die zur Durchführung eines Verfahrens zur Zuweisung von Übertragungsressourcen nach einem der Ansprüche 1 bis 6 geeignet sind, wenn das möglicherweise in Module zerlegte Programm in eine Basisstation und in D2D-Endgeräte geladen und ausgeführt wird, die dazu bestimmt sind, das Verfahren zur Zuweisung von Übertragungsressourcen durchzuführen.

**Claims**

1. Method (1) for allocating transmission resources, implemented by a cellular access network comprising a base station, to at least one transmitting terminal of a set of pairs of terminals of index n that are candidates for a direct mode communication, called D2D terminals, the channel between two D2D terminals in direct mode communication being called a D2D channel, **characterized in that** it comprises the definition (2) of a mapping table between different ranges of values of a utility metric and a list of ordered indices from a minimum index to a maximum index defining a ranking of resources available for the reporting of an indicator of the status of a D2D channel, and **characterized in that** it comprises, for a current transmission interval:

   - a calculation (3) by each transmitting terminal of a D2D pair of the set, of a value of the utility metric $v_n(t)$ evaluating an energy efficiency of the D2D communication of the pair,
   - a determination (4) of a transmission resource index to be used for a reporting of an indicator by each transmitting terminal of a D2D pair of the set by comparison of its value of the utility metric $v_n(t)$ with the mapping table,
   - a reporting (5), by each transmitting terminal of a D2D pair of the set, of an indicator via the resource of determined index,
   - a determination (6) of the so-called optimal D2D transmitting terminal for which the resource for reporting the indicator has the index of lowest order, this optimal terminal being the D2D terminal authorized to transmit during the current transmission interval.

2. Method (1) for allocating transmission resources according to Claim 1, whereby the utility metric $v_n(t)$ is a function of the transmitted power and of the instantaneous bit rate of the communication of the D2D transmitter.

3. Method (1) for allocating transmission resources according to Claim 2, whereby the method further comprises the broadcasting of at least one parameter which minimizes the probability of collision between the reportings of indicators on the resources used.

4. Method (1) for allocating transmission resources according to Claim 1, whereby the method further comprises a modification of the mapping table following a collision between reportings of an indicator by several D2D transmitting terminals using one and the same resource index.

5. Method (1) for allocating transmission resources according to Claim 1, whereby the access network is of LTE type and the reported indicator is quantized on a maximum of two bits of a PUCCH format 1b control channel.

6. Method (1) for allocating transmission resources according to Claim 1, whereby the access network is of LTE type and the allocation of transmission resources of the base station to the optimal terminal uses a downlink control channel PDCCH of the access network.

7. Base station for allocating transmission resources to at least one transmitting terminal of a set of pairs of terminals of index n that are candidates for a direct mode communication, called D2D terminals, the channel between two D2D terminals in direct mode communication being called a D2D channel, **characterized in that** the base station comprises:

   - a memory storing a mapping table between different ranges of values of a utility metric and a list of ordered indices from a minimum index to a maximum index defining a ranking of resources available for the reporting of an indicator of the status of a D2D channel,
- a receiver for receiving indicators reported via transmission resources for which the respective index is determined by the transmitting terminal of a D2D pair by comparison between its value of the utility metric $v_n(t)$ and the mapping table,
- a processor for determining a so-called optimal D2D transmitting terminal for which the resource for reporting the indicator has the index of lowest order,
- a transmitter for authorizing, via a control channel, the optimal terminal to transmit during the transmission interval.

8. Access network comprising at least one base station according to the preceding claim.

9. Access network according to Claim 8, whereby the mapping table is modified following a collision between reportings of an indicator by several D2D transmitting terminals using one and the same resource index.

10. Access network according to Claim 8, whereby the access network is of LTE type and the allocation of transmission resources of the base station to the optimal terminal uses a downlink control channel PDCCH of the access network.

11. D2D terminal for forming part of a set of pairs of terminals of index n in the coverage of a base station that are candidates for a direct mode communication, called D2D terminals, the channel between two D2D terminals in direct mode communication being called a D2D channel, **characterized in that** the terminal comprises:

   - a memory storing a mapping table between different ranges of values of a utility metric and a list of ordered indices from a minimum index to a maximum index defining a ranking of resources available for the reporting of an indicator of the status of a D2D channel,
   - a processing unit for calculating a value of the utility metric $v_n(t)$ evaluating an energy efficiency of the D2D communication of the pair and for determining a transmission resource index to be used for a reporting of an indicator by comparison of its value of the utility metric $v_n(t)$ with the mapping table,
   - a transmitter for reporting, to the base station, an indicator via the resource of determined index,
   - a receiver for receiving the reported indicators originating from other D2D terminals and/or for receiving an authorization to transmit originating from the base station.

12. D2D terminal according to Claim 11, whereby the processing unit updates the mapping table in case of collision during the reporting of the indicators.

13. D2D terminal according to Claim 11, whereby the utility metric $v_n(t)$ is a function of the transmitted power and of the instantaneous bit rate of the communication of said D2D terminal.

14. Computer program product comprising program instructions suitable for implementing a method for allocating transmission resources according to any one of Claims 1 to 6 when the program, possibly subdivided into modules, is loaded and run in a base station and in D2D terminals intended to implement the method for allocating transmission resources.

15. Information medium comprising program instructions suitable for implementing a method for allocating transmission resources according to any one of Claims 1 to 6 when said program, possibly subdivided into modules, is loaded and run in a base station and in D2D terminals intended to implement the method for allocating transmission resources.

Fig.1

Fig.3

Fig.4

**Fig.2**

**Fig.5**

**Fig.6**

DSP

EM_BS

RE_BS

**Pg**

MEM

**Pg**

RAM

BS

**Fig.7**

DSP

EM_
D2D

RE_
D2D

**Pg**

MEM

**Pg**

RAM

D2D

**Fig.8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K. DOPPLER ; M. RINNE ; C. WIJTING ; C. RIBEIRO ; K. HUGL.** Device-to-device communication as an underlay to lte-advanced networks. *IEEE Commun. Mag.,* 2009, vol. 47 (12), 42-49
- **F. WANG ; C. XU ; L. SONG ; Z. HAN.** Energy-efficient resource allocation for device-to-device underlay communication. *IEEE Transactions on Wireless Communications,* Avril 2015, vol. 14 (4), 2082-2092
- Design Aspects of Network Assisted Device-to-Device Communications. **DE GÁBOR FODOR ; ERIK DAHLMAN ; GUNNAR MILDH ; STEFAN PARKVALL ; NORBERT REIDER ; GYÖRGY MIKLÓS ; ZOLTÂN TURÁNYI.** Communications Magazine. IEEE, 2012
- **M. J. N. L. GEORGIADIS ; L. TASSIULAS.** Resource allocation and cross-layer control in wireless networks. 2006, 49-57
- Study on LTE device to device proximity services. *3GPP TR 36.843*